# EUROPEAN PATENT SPECIFICATION

(11) **EP 0 799 860 B1**
(45) Date of publication and mention of the grant of the patent: **13.10.1999**
(21) Application number: 97302275.9
(22) Date of filing: 02.04.1997
(51) Int. Cl.: C08L 83/04, C08K 13/02, C08L 91/00, C08K 3/22

(54) **Method for enhancing longevity of a surface drying oil on a silicone composition modified by incorporation of zinc oxide**
Verfahren zur Erhöhung der Langlebigkeit eines trockenem Ölfilms auf eine mit Zinkoxyd modifizierten Polysiloxanoberfläche
Procédé pour l'amélioration de la longévité d'un film d'une huile siccative sur une surface d'une composition d'organopolysiloxane contenant de l'oxyde de zinc

(30) Priority: 04.04.1996 US 628170
(43) Date of publication of application: 08.10.1997
(73) Proprietor: DOW CORNING CORPORATION, Midland Michigan 48686-0994 (US)
(72) Inventor: Altes, Michael Gene, Midland, Michigan 48642 (US); O'Neil, Virginia Kay, Midland, Michigan 48640 (US); Tselepis, Arthur James, Midland, Michigan 48640 (US); Wolf, Andreas Thomas Franz, Midland, Michigan 48642 (US)
(74) Representative: Kyle, Diana

(56) References cited:
- US-A- 5 338 574
- US-A- 5 357 025

## Description

This invention introduces a method for increasing the longevity of surface drying oil on a room temperature vulcanizable (RTV) silicone composition.

Silicone compositions which cure to produce elastomers at room temperature are widely used as sealants and caulking materials because they have a unique property profile for building construction. These properties include excellent weatherability, resistance to heat, low temperature flexibility, ease of application and rapid cure in place. However, cured silicone compositions over time often become dirty or stain surrounding substrates adjacent to them. This creates an unattractive appearance and cleaning the cured composition and the stain on the adjacent building materials is expensive and the results are often unsatisfactory. Therefore, the need of the construction industry is to develope a silicone composition which does not become dirty or stain adjacent building materials. Many methods have been proposed to eliminate these problems encountered with the use of RTV silicone sealants in construction.

Approaches to overcoming these problems are the use of surfactants as described by U.S. Patents 4,460,740 and 4,695,603; or by JP-As 56-76453 and 56-76452.

An especially successful approach to these problems is described in U.S. Patent 5,357,025 which describes the use of a siloxaphobic agent that contains at least one perfluorocarbon group per molecule. This group has the general formula CₓF₍₂ₓ₊₁₎ ⁻ where x has an average value of at least 6. Using this siloxaphobic agent in combination with a drying oil results in a particularly useful silicone composition. We have found that when RTV silicone compositions containing drying oil were used, the surface of the cured silicone composition has a drying oil oxidation product layer which gradually disappeared and reduced its effectiveness for remaining clean. It is therefore desirable to increase the effectiveness of the drying oil oxidation product layer to resist dirt or dust pick-up for longer periods of time.

This invention is a method of increasing the longevity of a drying oil layer on an air exposed surface of a cured silicone composition comprising
(A) mixing particulate zinc oxide into a non-acidic, room temperature vulcanizable silicone composition comprising a drying oil, a polymer with moisture condensable silyl end groups, a moisture sensitive crosslinking agent and a filler, where the zinc oxide is added in an amount of at least 2 parts by weight per 100 parts by weight of the polymer, and
(B) exposing the resulting mixture of (A) to atmospheric moisture producing said composition where said air exposed surface maintains said drying oil layer for a longer time period than if zinc oxide was not added.

The method of this invention provides RTV silicone compositions which cure to provide a cured composition with at least one air exposed surface which has a drying oil layer on it. This longevity of the drying oil layer is increased by the presence of particulate zinc oxide in our RTV silicone composition when an amount of at least 2 parts by weight, per 100 parts by weight of the polymer is present in the curable RTV silicone composition. Preferably, zinc oxide is present in amounts from 2 to 15 parts by weight, more preferably from 3 to 10 parts by weight, per 100 parts by weight of polymer.

The RTV silicone composition herein comprises those curable compositions known in the art where the hydrolysis of the hydrolyzable (condensable) group produces a non-acidic leaving compound. For this application, these compositions are termed non-acidic, RTV silicone compositions and comprise a polymer having condensable silyl end groups, a moisture sensitive crosslinking agent, a filler, drying oil and, optionally, a curing catalyst for the composition.

Representative polymers include polydiorganosiloxanes having condensable end groups and primarily made up of diorganosiloxane units (R'₂SiO), but small amounts of other siloxane units may be present, such as monoorganosilsesquioxane units (R'SiO_{3/2} or SiO₂ units) which provide branching and triorganosiloxy units which provide termination of the polymer chains. R' is a monovalent hydrocarbon radical or a halogenated monovalent hydrocarbon radical. Examples of monovalent hydrocarbon radicals are alkyl radical such as methyl, ethyl, propyl and n-octyl; alkenyl radicals such as vinyl and allyl; aryl radicals such as phenyl or tolyl; cycloalkyl radicals such as cyclohexyl; and aralkyl radicals such as 2-phenylethyl. Examples of halogenated monovalent hydrocarbon radicals are perfluoroalkylethyl radicals such as 3,3,3-trifluoropropyl and gamma-chloropropyl. The useful end groups of these polymers are hydroxyl groups or hydrolyzable groups such as silicon-bonded alkoxy, ketoximo, amino, amido, aminoxy and alkenoxy. Polydiorganosiloxanes which contain these hydrolyzable groups generally have chain terminating siloxane units of the formula -Si(X)_{y}(R')_{(3-y)} in which R' is as defined above. X is a hydrolyzable group and y is 1, 2 or 3.

The moisture sensitive crosslinking agent contains at least two hydrolyzable groups per molecule, preferably more than two hydrolyzable groups per molecule. The hydrolyzable groups are those where the leaving groups are non-acidic. When the polydiorganosiloxane contains more than two hydrolyzable groups per molecule, this crosslinker has two or more hydrolyzable groups per molecule. These crosslinkers are silanes or partially hydrolyzed products thereof. Examples of silicon-bonded hydrolyzable groups on these crosslinkers are alkoxy, ketoximo, amido, amino, aminoxy and alkenoxy. Specific examples of alkoxy groups are methoxy, ethoxy, n-propoxy, isopropoxy and methoxyethoxy. Suitable ketoximo groups are dimethylketoximo, methylethylketoximo, methylpropylketoximo, methylbutyl-ketoximo and diethylketoximo. Examples of amino groups are N,N-diethylamino, N-ethylamino, N-propylamino, N,N-methylcyclohexylamino, N-butylamino and N-cyclohexylamino. Akenyloxy groups are propenoxy, isopropenoxy and butenoxy. Some examples of amido groups are N-methylacetamido, N-ethylacetamido, N-butylacetylamido and N-methylbenzamido. Typical aminoxy groups are N,N-dimethylaminoxy, N,N-methylethylaminoxy and N,N-diethylaminoxy.

Examples of crosslinkers are methyltrimethoxysilane, methyltriethoxysilane, vinyltrimethoxysilane, methylphenyldiethoxysilane, 3,3,3-trifluoropropyltrimethoxysilane, methyltri(methylethylketoximo)silane, vinyltri(methylethylketoximo)silane, ethyltri(N,N-diethylamino)silane, dimethyldi(N,N-dibutylamino)silane, vinyltri(N-methyl-N-cyclo-hexylamino)silane, methyltri(N-methylacetamido)silane, methylvinyldi(N-methylacetamido)silane, methyltri(isoprenoxy)silane, n-propylorthosilicate and ethylpolysilicate.

The crosslinker is used in conventional amounts for making curable silicone compositions that cure at room temperature. The amounts used will vary depending upon the particular crosslinking agent chosen and the desired properties of the cured elastomer. Usually, this crosslinker is present in amounts of from 0.5 to 15 parts by weight, per 100 parts by weight of the polymer.

A mixture of polydiorganosiloxane and crosslinker will usually cure at room temperature when exposed to moisture. However, sometimes this time period is too slow for practical applications and it is often desirable to accelerate the cure rate and to reduce the cure time. In these situations, a catalyst is used. These catalysts include metal salts of carboxylic acids, such as dibutyl tin dilaurate, dibutyl tin diacetate and tin 2-ethylhexoate; or organotitanates such as tetrabutyl titanate, tetra-n-propyl titanate, diisopropoxy-di(ethoxyacetoacetyl) titanate and bis(acetylacetonyl)diisopropyl titanate.

For our RTV silicone compositions to have desirable properties, they also need to contain a filler. One or more fillers can be used. The filler is a reinforcing filler such as fumed silica, precipitated silica, calcium carbonate, carbon black and siloxane resins comprised of trimethylsiloxy units and SiO_{4/2} units. These reinforcing fillers have surfaces which are treated or untreated, as is known in the art. The filler can also be an extending filler such as calcium carbonate, quartz, diatomaceous earth (also considered a semi-reinforcing filler), iron oxide and titanium dioxide. Other filler or pigments are optionally added for the purpose of imparting color to the sealant.

The RTV silicone compositions of the present method contain a drying oil, which includes the natural drying oils, such as tung oil, linseed oil, vernonia oil and oiticica oil; or modified drying oils such as boiled linseed oil and dehydrated castor oil. Tung oil and oiticica oil are preferred because they provide the broadest utility with different kinds of RTV silicone compositions and give the most improved results. An effective amount of drying oil is from 0.5 to 10 parts by weight and the preferred amount is from 0.5 to 4 parts by weight, per 100 parts by weight of polymer.

Other ingredients which are conventionally used in formulating RTV silicone compositions are used in our invention; as long as they do not interfere with the drying oil surface layer or its longevity. These ingredients include non-slump agents and additives to provide mildew resistance.

The non-acidic, RTV silicone compositions useful in our invention are commercially available or are prepared by methods known in the art. A number of these compositions are described herein. For this invention, drying oil and particulate zinc oxide are added to these known compositions. A preferred method is to combine the polymer with the crosslinking agent and curing catalyst, if used; then filler, zinc oxide and finally the drying oil are added. The drying oil often has a tendency to separate from the remaining ingredients of our curable silicone composition during storage. Therefore, it is preferred to combine drying oil with the rest of the ingredients shortly before it is exposed to an air atmosphere for curing. When our silicone composition is to be stored, the polymer, crosslinking agent, filler, curing catalyst and zinc oxide are mixed and stored in one storage container and the drying oil is stored in a second storage container. Thereafter, the contents of the two containers are mixed shortly before applying the claimed composition to a substrate, such as applying as a sealant or caulking material and then exposing it to atmospheric moisture to allow it to vulcanize. Non-acidic, RTV silicone compositions that are available commercially can be used herein and the particulate zinc oxide is readily blended with them and then followed by adding the drying oil.

After application of our composition to a substrate, it is exposed to moisture, such as atmospheric moisture, until a cured elastomer with a modified surface is obtained. Different RTV silicone compositions will cure at different rates; however, one can easily estimate the cure time by checking the surface to see if it is tacky. If upon lightly touching the surface with a finger, a tackiness is observed, the surface has not yet reached the cured state. Contrastingly, if no tack is observed, the surface is considered as cured. Usually, the surface reaches the cured state in a few hours to one day to avoid dust and dirt from contacting and adhering to the surface.

Cured silicone elastomeric surfaces are known to have glossy to highly glossy surfaces. Over a period of time, these surfaces become dull and have a velvet appearance, i.e. a dull surface or finish, also known as a matte finish (mat finish). As the cured surface of the composition becomes dull, the drying oil layer is forming on the air exposed surface and oxidation is taking place.

A preferred method of this invention mixes the particulate zinc oxide with an RTV silicone composition obtained by mixing a hydroxyl endblocked polydiorganosiloxane, a filler and the moisture sensitive crosslinking agent, (a ketoximo-silicon crosslinker having at least three silicon-bonded ketoximo groups per molecule). A suitable ketoximosilicon crosslinker is a mixture of ketoximosilanes and alkoxyketoximosilanes. One such mixture comprises methyltri(methylethylketoximo)silane, methyldi(methylethylketoximo)methoxysilane and methyldimethoxy(methylethylketoximo)silane. Another ketoximosilane mixture comprises a mixture of tetraketoximosilane, ethoxytri(methylethylketoximo)silane, diethoxydi(methylethylketoximo)silane and triethoxy(methylethylketoximo)silane. The latter mixture is known in the art, for example, from U.S. Patents 4,657,967 and 4,973,623 which teach ketoximosilane mixtures and RTV silicone compositions incorporating such mixtures. Our RTV silicone compositions, made from these ketoximosilane mixtures, preferably contain a catalyst, such as a tin catalyst like dibutyl tin dilaurate or a titanate catalyst such as diisopropoxy di(ethoxyacetoacetyl)titanate. Also, our curable RTV silicone compositions contain particulate zinc oxide and drying oils. The preferred drying oil is tung oil and the preferred filler is calcium carbonate.

Another preferred composition of this invention mixes particulate zinc oxide with an RTV silicone composition obtained by mixing a hydroxyl endblocked polydiorganosiloxane, an aminoxysilicon crosslinker and, as a chain extender, a diorganodi(amido)silane such as methylvinyldi(N-methylacetamido)silane. Similar RTV silicone compositions are known from U.S. Patents 3,817,909 and 3,996,184,which also show the combination of aminoxysilicon crosslinkers and amidosilane chain extenders. The chain extender is typically used to make low modulus silicone compositions useful in the building construction industry. These compositions are prepared without the use of a catalyst. Calcium carbonate is a useful filler for such compositions. The preferred compositions are those to which particulate zinc oxide and drying oil have been added. Tung oil is the preferred drying oil.

Also preferred herein is a two package composition, in which a first package comprises a hydroxyl endblocked polydiorganosiloxane, filler and, optionally, drying oil and a second package comprises the moisture sensitive crosslinking agent. The second package may also contain filler and a curing catalyst for the curable RTV silicone composition. If drying oil is not present in the first package, it may be contained in a third package as a part of a three package composition. The particulate zinc oxide of this invention is readily added to any package. One specific RTV silicone composition of this kind, is where the moisture sensitive crosslinking agent is an alkoxysilicon crosslinker, such as n-propyl orthosilicate or ethylpolysilicate and a tin catalyst is used. Such compositions are well known in the art. Preferably, the drying oil is tung oil. These compositions are also stored in separate packages, as above, to prevent premature curing if all the ingredients are mixed for too long a time period before use of the composition.

A composition which uses an alkoxysilicon compound as the moisture sensitive crosslinker may contain all the ingredients in just one package. Storage stable compositions are obtained when a titanate catalyst is used as the curing catalyst; and the ratio of alkoxysilicon compound to the endgroups of the polydiorganosiloxane are such that there is at least one alkoxysilicon molecule per polydiorganosiloxane endgroup. Suitable one package RTV silicone compositions comprising alkoxysilicon crosslinkers are described in U.S. Patents 3,161,614, 3,175,993, 3,334,067 and 4,871,827. In these methods, our drying oils are preferably stored in a separate container or storage compartment from the remainder of the one package RTV silicone composition. Then, the particulate zinc oxide and the drying oil are mixed with the RTV silicone composition shortly before it is intended for use. The preferred drying oil is tung oil.

Another preferred RTV silicone composition is one which contains a siloxaphobic agent in addition to the drying oil, such as U.S. Patent 5,357,025. The siloxaphobic agent is a material providing a siloxaphobic surface layer to the cured composition. Siloxaphobic agents are a fluorocarbon alcohol, a reaction product of a fluorocarbon alcohol and a hydrolyzable silane or a mixture of fluorocarbon alcohol and the reaction product of fluorocarbon alcohol and hydrolyzable silane. The fluorocarbon alcohol contains at least one fluorocarbon group of the formula CₓF₍₂ₓ₊₁₎- where x has an average value of at least 6. We have found that fluorocarbon alcohols which have x of less than 6 did not prevent migration of siloxane species to the surface of the curred composition. Preferably, the fluorocarbon alcohols are those with fluorocarbon groups in which x has an average value of from 6 to 20. The fluorocarbon alcohols are commercially available and are illustrated by the following formulae 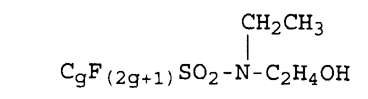 where g has a value of from 6 to 20. Commercial mixtures are sold in which g has an average of 7 and contain species in which g ranges from 6 to 10 inclusive. Such a mixture is FC-10™ which is sold by Minnesota Mining and Manufacturing Company (3M)™, Minneapolis, Minnesota. Other commercial mixtures sold by 3M™ are FC-170C™ which is a fluorocarbon alcohol having the formula 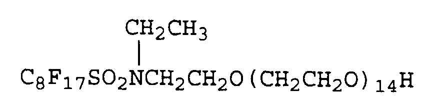 and FC-171™ which is a fluorocarbon alcohol and has the following average formula 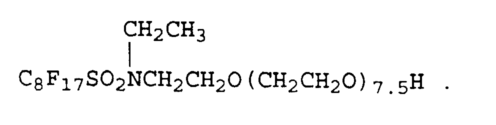 Other commercially available fluorocarbon alcohols include C₈F₁₇CH₂CH₂OH and CₓF₍₂ₓ₊₁₎CH₂CH₂O(CH₂CH₂O)_{f}H where x is from 6 to 16 and f is a positive integer. The siloxaphobic agent is preferably a reaction product of a fluorocarbon alcohol and a hydrolyzable silane. These agents are siloxaphobic reaction product mixtures which are made by mixing at least 0.01 mole of fluorocarbon alcohol with one mole of hydrolyzable silane under conditions which exclude moisture. Preferably, 0.1 mole of fluorocarbon alcohol is used per mole of hydrolyzable silane. Fluorocarbon alcohols can be used by themselves but some are solid at room temperature and handling or mixing with other ingredients is not fully acceptable. The fluorocarbon alcohols are described above and the hydrolyzable silanes are those also given above as the crosslinking agent. The resulting mixture is heated until some of the fluorocarbon alcohol reacts with the hydrolyzable silane and forms a C-O-Si bond.

The resulting reaction mixture is unreacted hydrolyzable silane, unreacted fluorocarbon alcohol and a reaction product of fluorocarbon alcohol and hydrolyzable silane in which at least one Y group is replaced by the fluorocarbon alcohol, as illustrated by the following equation 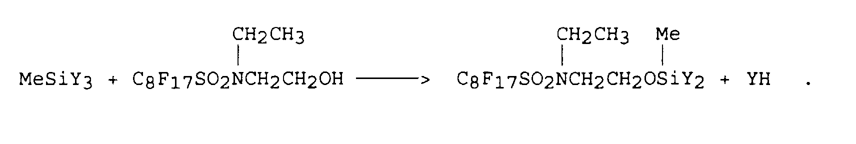 These siloxaphobic reaction product mixtures contain from >0% to 100% reaction product of fluorocarbon alcohol and silane. These mixtures provide the preferred siloxaphobic agents, especially when the reaction product of fluorocarbon alcohol and silane is <50% cf the siloxaphobic reaction mixture. A preferred siloxaphobic reaction mixture is one in which the fluorocarbon alcohol has the formula 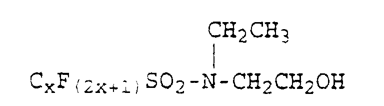 wherein x has an average value of at least 6, the hydrolyzable silane has the formula 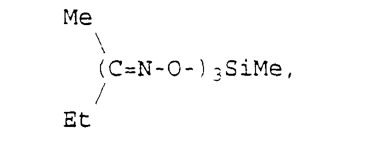 and the reaction product of the fluorocarbon alcohol and the hydrolyzable silane comprises a compound of the formula 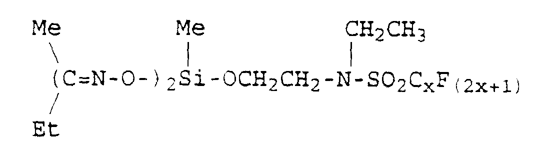 wherein x has an average value of at least 6. This siloxaphobic reaction mixture is preferred because the siloxaphobic surface layer is rapidly formed during cure of the elastomeric polyorganosiloxane composition and because the surface resists the accumulation of dirt or stain when the cured elastomer is vulnerable to dirt and dust.

The siloxaphobic reaction mixture through some unknown mechanism more readily forms a siloxaphobic surface layer than the use of unreacted fluorocarbon alcohol, i.e. the fluorocarbon alcohol is merely mixed with the other composition ingredients. The siloxaphobic surface layer is regenerated over the useful life of the cured silicone composition. The siloxaphobic reaction mixture acts as a reservoir and continually renews the siloxaphobic surface layer as it becomes depleted with age. The siloxaphobic surface layer also provides a cured composition which retards color formation on the surface and adjacent surrounding areas which may be exposed to weather. The siloxaphobic surface layer also keeps the properties of the cured elastomer from changing with age because siloxane ingredients are not readily lost by migration or evaporation, but are properly maintained within the cured silicone matrix. The siloxaphobic reaction mixture does not adversely effect the curing properties of the sealant or caulking material; and the adhesion to various substrates, particularly those used in building construction, are superior. The siloxaphobic reaction mixture is used in small amounts; yet provides useful properties over long periods of time. The amounts are such that the fluorocarbon group is present in the composition in amounts of from 0.1 to 7 inclusive weight percent, based on the weight of the composition, and preferably from 1 to 3 weight percent.

The following examples are presented for illustrative purposes and are demonstrative of the present invention which is properly delineated in the claims. In the examples, part or parts refers to parts by weight and all viscosities were measured at 25°C.

### Example

An RTV silicone composition was prepared by mixing under conditions which protected against ingress of moisture. In a mixer, 100 parts of a silanol endblocked polydimethylsiloxane having a viscosity of 50 Pa·s and 1 part of a ketoximosilane mixture of 72 weight percent of methyltri(methylethylketoximo)silane, 21 weight percent of methyldi(methylethylketoximo)methoxysilane, 0.5 weight percent of methyldimethoxy(methylethylketoximo)silane and 6.5 weight percent of impurities, were mixed for one minute under 74.29 kPa of vacuum and allowed to stand for 30 minutes. Then, 1 part of methylvinyidi(N-methylacetamido)silane was added and stirred for one minute under 74.29 kPa of vacuum. To the resulting mixture, 12 parts of a mixture of 2.5 parts of the above ketoximosilane mixture, 2.4 parts of a fluorocarbon alcohol (FC-10™), 0.4 part of beta-aminoethyl-gamma-aminopropyltrimethoxysilane, 0.4 part of gamma-glycidoxypropyltimethoxysilane, 0.07 part of dibutyl tin dilaurate, 4 parts of methyltrimethoxysilane, 1 part of diisopropoxy di(ethoxyacetoacetyl) titanate, 1.1 parts of the reaction product of the FC-10™ fluorocarbon alcohol and the ketoximosilane mixture having the formula 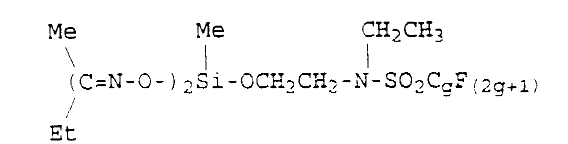 wherein g has an average value of 7 and 0.6 part impurities were added and stirred for one minute under 74.29 kPa vacuum. FC-10™ was sold by Minnesota Mining and Manufacturing Company (3M)™, Minneapolis, Minnesota and is a mixture of species from the formula 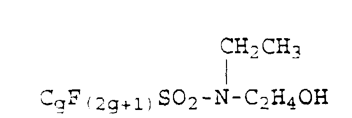 in which g has a value of from 6 to 10.

Next, 60 parts of stearic acid-treated precipitated calcium carbonate filler, having an average particle diameter of 0.04 micrometer and 1 part of a polymer of 2,5-furandione with 1,3-butadiene were added and stirred for 5 minutes under 74.29 kPa of vacuum. The resulting mixture was identified as a base composition and six such base mixtures were prepared. One of the base compositions was considered a control formulation and 1.75 part of tung oil was added and stirred under 74.29 kPa of vacuum. To five other base compositions, 2, 4, 6, 8 and 10 parts of particulate zinc oxide, having an average particle diameter of 0.12 micrometers, were added to each respectively and each was then stirred for 5 minutes under 74.29 kPa of vacuum. To each composition prepared, 1.75 parts of tung oil were added and stirred one minute under 74.29 kPa of vacuum.

Each resulting formulation was then packaged in Semco™ tubes, made by Courtlands Aerospace, California and centrifuged to eliminate any entrained air. Samples of each of the 6 formulations were cast as 5.08 by 5.08 cm slabs of 0.254 cm thickness on polyethylene sheets and allowed to cure for 14 days at 21°C and 50% relative humidity. After cure, each of the sheets had developed a matte finish which was indicative of a tung oil modified silicone sealant surface. Test panels containing the 6 formulations were placed in a QUV™ accelerated weathering chamber, using a QUV™ A 340 light source, with a cycle of 8 hours ultraviolet radiation exposure at 70°C., followed by 4 hours of condensing humidity at 50°C. These evaluations were done in accordance with ASTM D 4587-86. The QUV™ chamber was from Q-Panel Corp., Cleveland, Ohio.

After 650 hours in this chamber, inspection of the surface of the control formulation showed that the tung oil surface was deteriorating because the matte finish was disappearing, whereas the surfaces of those formulations containing particulate zinc oxide of the present invention showed no signs of loss of surface tung oil layer, because the matte finish remained equivalent to the matte finish initially observed. These results prove that particulate zinc oxide in an RTV silicone formulation unexpectedly increases the longevity of the the drying oil on its exposed surface.

Six RTV silicone compositions were prepared as described above, except the combined amount of calcium carbonate filler and particulate zinc oxide was kept constant at 60 parts per 100 parts of polydimethylsiloxane, e.g. the control composition = 60 parts calcium carbonate; the composition containing 2 parts zinc oxide had 58 parts of calcium carbonate, the composition containing 4 parts zinc oxide had 56 parts of calcium carbonate; and the like. The combined parts of zinc oxide and calcium carbonate were kept constant to avoid any potential variations of physical properties due to change of the pigment to binder ratio. Each of these formulations were tested for durometer using the Shore A scale by ASTM D 2240 and also tested according to ASTM D 412, for tensile strength at break, reported in kPa (kilopascals), the elongation at break reported in percent and 100% modulus also reported in kPa. The results of these tests are reported in the Table.

**TABLE**

| AMOUNT OF ZINC OXIDE IN FORMULATION, in parts | | | | | | |
|---|---|---|---|---|---|---|
| PROPERTY | 0 | 2 | 4 | 6 | 8 | 10 |
| DUROMETER | 19 | 20 | 18 | 20 | 19 | 19 |
| TENSILE AT BREAK, kPa | 1880 | 1820 | 1660 | 2030 | 1770 | 2010 |
| ELONGATION, % | 1004 | 1087 | 1045 | 1192 | 1069 | 1169 |
| 100% MODULUS, kPa | 260 | 230 | 230 | 230 | 230 | 230 |

The cured physical properties were not functionally effected by the presence of the particulate zinc oxide as shown by comparing the control to those of our claimed formulations containing zinc oxide.

## Claims

1. A method of increasing the longevity of a drying oil layer on an air exposed surface of a cured silicone composition comprising:
(A) mixing particulate zinc oxide into a non-acidic room temperature curable silicone composition comprising a drying oil, a polymer with moisture condensable silyl end groups, a moisture sensitive crosslinking agent and a filler where the zinc oxide is added in an amount of at least 2 parts by weight, per 100 parts by weight of the polymer;
(B) exposing the resulting mixture of (A) to atmospheric moisture to produce a cured composition having a drying oil layer on an air exposed surface where said surface maintains the drying oil layer for a longer time period than if zinc oxide was not added.

2. The method in accordance with claim 1 in which the room temperature curable silicone composition further comprises a fluorinated compound.

3. The method in accordance with claim 2 in which the fluorinated compound is a fluorinated alcohol having at least 13 fluorine atoms per molecule.

4. The method in accordance with any of claims 1-3 in which the drying oil is tung oil.

5. The method in accordance with claim 1 in which the silicon-crosslinker is a ketoximosilicon crosslinker having at least three silicon-bonded ketoximo groups per molecule.

6. The method in accordance with claim 1 in which the room temperature vulcanizable silicone composition further comprises a titanate catalyst or a tin catalyst.

7. The cured silicone composition obtainable by any of the methods of claims 1-6 having an air exposed drying oil surface layer which is maintained for long periods of time when the air exposure includes exposure to ultraviolet radiation.

## Patentansprüche

1. Verfahren zur Erhöhung der Langlebigkeit einer Schicht eines selbsttrocknenden Öls auf einer der Luft ausgesetzten Oberfläche einer gehärteten Siliconzusammensetzung, umfassend:
(A) Mischen von teilchenförmigem Zinkoxid in eine nichtsaure, bei Raumtemperatur härtbaren Siliconzusammensetzung, die ein selbsttrocknendes Öl, ein Polymer mit durch Feuchtigkeit kondensierbaren Silylendgruppen, ein feuchtigkeitssensitives Vernetzungsmittel und einen Füllstoff enthält, wobei das Zinkoxid in einer Menge von wenigstens 2 Gewichtsteilen pro 100 Gewichtsteilen des Polymers zugesetzt wird,
(B) Aussetzen der aus (A) resultierenden Mischung an atmosphärische Feuchtigkeit, um eine gehärtete Zusammensetzung mit einer Schicht aus selbsttrocknendem Öl auf einer der Luft ausgesetzten Oberfläche zu erzeugen, wobei die Oberfläche die Schicht aus selbsttrocknendem Öl für einen längeren Zeitraum beibehält als wenn kein Zinkoxid zugesetzt worden wäre.

2. Verfahren nach Anspruch 1, bei dem die bei Raumtemperatur härtbare Siliconzusammensetzung zusätzlich eine fluorierte Verbindung enthält.

3. Verfahren nach Anspruch 2, bei dem die fluorierte Verbindung ein fluorierter Alkohol mit wenigstens 13 Fluoratomen pro Molekül ist.

4. Verfahren nach einem der Ansprüche 1 - 3, bei dem das selbstrocknende Öl Tungöl ist.

5. Verfahren nach Anspruch 1, bei dem das Siliciumvernetzungsmittel ein Ketoximosiliciumvernetzungsmittel mit wenigstens 3 an Silicium gebundenen Ketoximogruppen pro Molekül ist.

6. Verfahren nach Anspruch 1, bei dem die bei Raumtemperatur vulkanisierbare Siliconzusammensetzung zusätzlich einen Titanatkatalysator oder einen Zinnkatalysator enthält.

7. Gehärtete Siliconzusammensetzung, die durch eines der Verfahren nach Anspruch 1 - 6 erhältlich ist, mit einer der Luft ausgesetzten Oberflächenschicht aus einem selbsttrocknenden Öl, die für lange Zeiträume beibehalten wird, wenn das Aussetzen an die Luft Bestrahlung mit ultravioletter Strahlung beinhaltet.

## Revendications

1. Un procédé pour accroître la longévité d'une couche d'huile siccative sur une surface exposée à l'air d'une composition de silicone durcie, consistant à :
(A) mélanger de l'oxyde de zinc en particules dans une composition de silicone non acide, durcissable à la température ambiante, comprenant une huile siccative, un polymère ayant des groupes terminaux silyles condensables par l'humidité, un agent de réticulation sensible à l'humidité et une charge, l'oxyde de zinc étant ajouté en une quantité d'au moins 2 parties en poids pour 100 parties en poids du polymère ;
(B) exposer le mélange résultant de (A) à l'humidité atmosphérique pour produire une composition durcie ayant une couche d'huile siccative sur une surface exposée à l'air, ladite surface conservant la couche d'huile siccative pendant une période de temps plus longue que si l'oxyde de zinc n'était pas ajouté.

2. Le procédé selon la revendication 1, dans lequel la composition de silicone durcissable à la température ambiante contient, de plus, un composé fluoré.

3. Le procédé selon la revendication 2, dans lequel le composé fluoré est un alcool fluoré ayant au moins 13 atomes de fluor par molécule.

4. Le procédé selon l'une quelconque des revendications 1 à 3, dans lequel l'huile siccative est l'huile d'abrasin.

5. Le procédé selon la revendication 1, dans lequel l'agent de réticulation silicié est un agent de réticulation cétoximosilicié ayant au moins trois groupes cétoximo liés au silicium par molécule.

6. Le procédé selon la revendication 1, dans lequel la composition de silicone vulcanisable à la température ambiante contient, de plus, un catalyseur du type titanate ou un catalyseur à l'étain.

7. La composition de silicone durcie pouvant être obtenue par l'un quelconque des procédés des revendications 1 à 6, ayant une couche superficielle d'huile siccative exposée à l'air, qui est conservée pendant de longues périodes de temps lorsque l'exposition à l'air comprend une exposition à un rayonnement ultraviolet.
